# EUROPEAN PATENT SPECIFICATION

(11) **EP 4 082 909 B1**
(45) Date of publication and mention of the grant of the patent: **03.07.2024**
(21) Application number: 22163359.7
(22) Date of filing: 21.03.2022
(51) Int. Cl.: B64D 13/00, B64D 13/06

(54) **AIR DISTRIBUTION NOZZLES, AIRCRAFT THAT INCLUDE AIR DISTRIBUTION NOZZLES, AND METHODS OF UTILIZING AIR DISTRIBUTION NOZZLES**
LUFTVERTEILUNGSDÜSEN, FLUGZEUG MIT LUFTVERTEILUNGSDÜSEN UND VERFAHREN ZUR VERWENDUNG VON LUFTVERTEILUNGSDÜSEN
BUSES DE DISTRIBUTION D'AIR, AÉRONEF COMPRENANT DES BUSES DE DISTRIBUTION D'AIR ET PROCÉDÉS D'UTILISATION DES BUSES DE DISTRIBUTION D'AIR

(30) Priority: 28.04.2021 US 202163181084 P; 28.06.2021 US 202117361116
(43) Date of publication of application: 02.11.2022
(73) Proprietor: The Boeing Company, Arlington, VA 22202 (US)
(72) Inventor: JONES, Nicholas A, Chicago, 60606-2016 (US); HAAS, William C, Chicago, 60606-2016 (US); PATTEE, Timothy Douglas, Chicago, 60606-2016 (US)
(74) Representative: Boult Wade Tennant LLP

(56) References cited:
- EP-A2- 0 292 033
- WO-A1-2007/147259
- CA-A1- 3 085 629
- JP-A- H09 122 428
- US-A- 3 768 394
- US-A- 6 024 639

## Description

### BACKGROUND

The present disclosure relates generally to air distribution nozzles, to aircraft that include air distribution nozzles, and/or to methodsof utilizing air distribution nozzles.

Distribution nozzles may control, direct, and/or regulate a flow of a fluid, such as air, and may be utilized in a variety of applications. As an example, air distribution nozzles may be utilized to form and/or define an air curtain, such as to permit and/or to facilitate different environmental controls on each side of the air curtain. As another example, air distribution nozzles may be utilized to regulate airflow within an aircraft. In a specific example, an air distribution nozzle may be utilized to form and/or to define an air curtain in a cockpit of the aircraft, such as to permit and/or facilitate independent environmental control of a pilot seating area and a co-pilot seating area of the aircraft. Conventional air distribution nozzles are relatively complex, utilize a significant number of separately manufactured and subsequently assembled parts, and/or are relatively expensive. Thus, there existsa need for improved air distribution nozzles, aswell as for aircraft that include improved air distribution nozzles and/or improved methodsof utilizing improved air distribution nozzles.

US6 024 639 A, in accordance with its abstract, states an injector air outlet includes a temperature sensor and a smoke sensor to simultaneously carry out the functions of air recirculation and temperature and smoke monitoring within a closed interior space, such as a passenger cabin or a freight or cargo hold in an aircraft. The injector air outlet includes a housing wall with an injector mixing chamber therein. A primary supply air inlet receives primary supply air from the aircraft's air distribution duct network, and blows the primary supply air through an injection nozzle into the mixing chamber so as to create a reduced or negative pressure in the mixing chamber. Cabin exhaust air is sucked through asecondary air inlet and a secondary air channel into the mixing chamber, due to the reduced pressure or suction effect therein. The primary air and secondary air are mixed together and then ejected forcefully back into the cabin or cargo hold. A sensor unit including a temperature sensor and a smoke sensor is installed in the secondary air channel so that a flow of exhaust air is continuously positively caused to flow over the sensor unit.

JP H09 122 428 A, in accordance with its abstract, states air in a smoking space is sucked from a first suction hole and air above a main body is sucked from a suction hole by a fan device in an air cleaner, and blown-off strongly from an air outlet via an air passage. An air flow restricting component composed of a metal is provided on aventilation line to a short side section of the air outlet to increase the air flow to a long side section. A divider is protruded downwardly from a sealing surface along the edge of the long side section, and the movement of blown-off air to the first suction hole is restricted.

WO2007/147259A1, in accordance with its abstract, states devices and systems are provided, that entrain ambient air within a primary stream of pressurised air, for use in a variety of applications including aircraft, buildings and other stationary structures. The ambient air isdrawn through an air treatment such a filter before entrainment within the primary stream. The combined streams are then delivered to a ventilation system, an air curtain or other suitable recipient of treated, thermally conditioned air. The systems include air curtain systems and ventilation systems for aircraft and other vehicles.

CA3085629A1, in accordance with its abstract, states an overhead flow distribution assembly for an aircraft cabin, including a conduit defining a plenum having an inlet, upper outlets and lower outlets, the upper outlets spaced apart from each other along a longitudinal direction of the aircraft, the lower outlets spaced apart from each other along the longitudinal direction, the inlet being located between the upper outlets and the lower outlets, and a baffle extending within the plenum along the longitudinal direction, the baffle being located between the upper outlets and at least part of the inlet along a transverse direction normal to the longitudinal direction, the baffle having openings defined therethrough, the baffle configured to restrict airflow from the at least part of the inlet toward the upper outlets. A method of balancing a flow in an overhead flow distribution assembly for an aircraft cabin is also discussed.

EP0292033A2, in accordance with its abstract, states a supply air ventilation system for providing symmetrical airflow distribution in the cabin of an aircraft, while avoiding excessive flow velocity. The ventilation system includes a supply duct from which pressurized supply air is delivered through a first nozzle at a relatively higher velocity and lower flow volume than through a second nozzle. Air flowing through the first nozzle attaches to a surface of an overhead storage bin that curves downwardly into the cabin of the aircraft due to the Coanda Effect, and mixes with the lower velocity higher volume air flowing through the second nozzle, thereby carrying it downwardly into the aircraft cabin.

US3768394A, in accordance with its abstract, states a fluid curtain generator according to the present invention comprising a generator for generating a high velocity stream of primary air and means for receiving the high velocity stream of air so as to mix the primary air with secondary air. The device also controls the rate of expansion of the thickness of the air curtain generated by mixing the primary and secondary air. The generator for generating the high velocity stream of primary air is preferably in the form of a conduit which is formed with a plurality of passageways opening outwardly therefrom. Mixing of primary and secondary air is achieved by passing the primary air through a venturi section and allowing it to expand in an expansion chamber while simultaneously inducing secondary air into the primary air stream. Preferably the primary air is directed between the venturi section formed at the inner end of a pair of guide plates arranged in a spaced relationship one on either side of the jet of primary air. The venturi section is spaced outwardly from the discharge of the primary air generator a distance sufficient to permit secondary air to be drawn in from the atmosphere on either side of the primary air stream. A closure plate may also be provided so that the atmosphere on one or other side of the venturi may be closed off to prevent secondary air being drawn into the venturi section from that side.

### SUM MARY

There is provided an air distribution nozzle comprising an elongate inlet chamber extending along an elongate inlet chamber length measured along an elongate inlet chamber longitudinal axis of elongate inlet chamber, an elongate outlet chamber extending at least partially along the elongate inlet chamber length, and an elongate slot that extends between, and fluidly interconnects, the elongate inlet chamber and the elongate outlet chamber. The air distribution nozzle further comprisesa motive fluid inlet port that extends into the elongate inlet chamber wherein the motive fluid inlet port is configured to receive a motive fluid flow along a motive flow axis, wherein the motive flow axis is parallel to the elongate inlet chamber longitudinal axis. The air distribution nozzle also comprises a suction inlet chamber that extends from a suction inlet port to the elongate inlet chamber. The suction inlet port opens into the suction inlet chamber and the suction inlet port is configured to receive a suction inlet fluid flow along a suction inlet flow axis. The air distribution nozzle also comprises a sensor port that extends into the suction inlet chamber. The air distribution nozzle further comprises an elongate outlet port that extends from the elongate outlet chamber. The elongate outlet port isconfigured to discharge an outlet fluid flow, which includes both the motive fluid flow and the suction inlet fluid flow, along an outlet flow axis. The outlet flow axis is oriented at an outlet flow skew angle relative to the motive flow axis.
The air distribution nozzle may comprise a motive fluid acceleration structure, wherein the motive fluid acceleration structure isconfigured to accelerate the motive fluid flow to provide a target suction inlet flow rate for the suction inlet fluid flow. Optionally, the motive fluid acceleration structure is positioned to accelerate the motive fluid flow prior to flow of the motive fluid flow past the separation structure. Optionally, the air distribution nozzle may comprise a sensor, wherein the sensor includes, or is, a temperature sensor. Optionally, the suction inlet flow axis is perpendicular, or at least substantially perpendicular, to: (i) the suction inlet port; and/or (ii) a transverse cross-section of the suction inlet port. Optionally, the motive flow axis is: (i) perpendicular, or at least substantially perpendicular, to a transverse cross-section of the motive fluid inlet port; and/or (ii) parallel, or at least substantially parallel, to an elongate inlet chamber longitudinal axis of the elongate inlet chamber. Optionally, the outlet flow axis is at least one of: (i) perpendicular, or at least substantially perpendicular, to a transverse cross-section of the elongate outlet port; (ii) perpendicular, or at least substantially perpendicular, to an outlet port longitudinal axis of the elongate outlet port; and (iii) perpendicular, or at least substantially perpendicular, to an outlet chamber longitudinal axis of the elongate outlet chamber. Optionally, the motive fluid inlet port is oriented to direct the motive fluid flow along, or at least substantially along, an/the elongate inlet chamber longitudinal axisof the elongate inlet chamber. Optionally, the transverse cross-section of the motive fluid inlet port is perpendicular, or at least substantially perpendicular, to a/the elongate inlet chamber longitudinal axis of the elongate inlet chamber. Optionally, the elongate inlet chamber defines an/the elongate inlet chamber length and the elongate outlet chamber defines an outlet chamber length. Preferably, the elongate inlet chamber is shaped to induce a pair of counter-rotating vortices in fluid flow from the elongate slot to the elongate outlet port. Preferably, the outlet fluid flow is configured to generate an air curtain.

The aircraft includes the air distribution nozzle and an air supply conduit configured to provide the motive fluid flow to the motive fluid inlet port. Optionally, the air distribution nozzle is positioned within a cockpit of the aircraft, and further the outlet fluid flow is configured to generate an air curtain between a pilot seating area of the aircraft and a co-pilot seating area of the aircraft.

The methods include providing the motive fluid flow to the elongate inlet chamber via the motive fluid inlet port and along a motive flow direction. The methods also include redirecting the motive fluid flow, within the elongate inlet chamber, to generate a slot fluid flow that flows through the elongate slot and into the elongate outlet chamber. The methodsfurther include generating, within the elongate outlet chamber, a pair of counter-rotating vortices within the slot fluid flow. The methods also include discharging the outlet fluid flow from the elongate outlet port and along an outlet flow direction. Optionally, the discharging includes discharging such that the outlet flow direction is oriented at the outlet flow skew angle relative to the motive flow direction. Preferably, the discharging includes: (i) discharging a linear outlet fluid flow; and/or (ii) discharging a laminar outlet fluid flow.

The use of an air distribution nozzle may comprise using the air distribution nozzle to receive a motive fluid flow in a motive inlet direction, to redirect the motive fluid flow to an outlet flow direction that is oriented at an outlet flow skew angle relative to the motive flow direction, and to generate an outlet fluid flow that defines an air curtain. Optionally, an air distribution nozzle is used to both detect a temperature of air within an interior of an aircraft and provide an outlet fluid flow to the interior of the aircraft.

### BRIEF DESCRIPTION OF THE DRAWINGS

Fig. 1 is a schematic illustration of examples of an aircraft that may include and/or utilize an air distribution nozzle.
Fig. 2 is a schematic illustration of examples of an air distribution nozzle.
Fig. 3 is a less schematic side view illustrating an example of an air distribution nozzle.
Fig. 4 is a bottom view of the air distribution nozzle of Fig. 3.
Fig. 5 is a left end view of the air distribution nozzle of Fig. 3.
Fig. 6 is a right end view of the air distribution nozzle of Fig. 3.
Fig. 7 is a cross-sectional view of the air distribution nozzle of Fig. 3 taken along line 7-7 of Fig. 3.
Fig. 8 is a cross-sectional view of the air distribution nozzle of Fig. 3 taken along line 8-8 of Fig. 3.
Fig. 9 is a cross-sectional view of the air distribution nozzle of Fig. 3 taken along line 9-9 of Fig. 5.
Fig. 10 is a cross-sectional view of the air distribution nozzle of Fig. 3 taken along line 10-10 of Fig. 5.

### DESCRIPTION

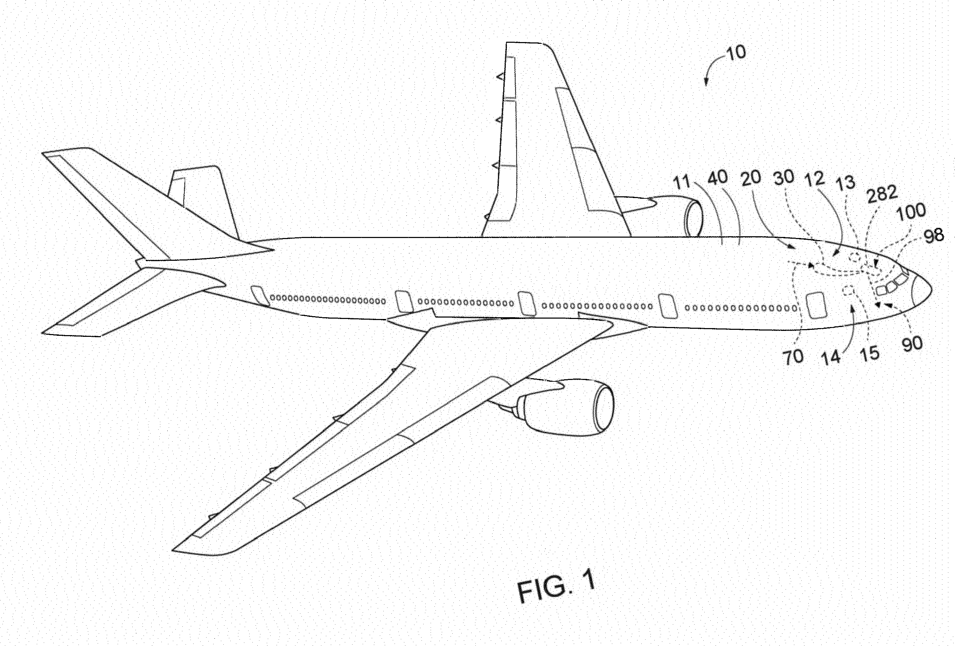

Figs. 1-10 provide illustrative, non-exclusive examples of air distribution nozzles 100, of aircraft 10, and/or of methods according to the present disclosure. Elementsthat serve a similar, or at least substantially similar, purpose are labeled with like numbers in each of Figs. 1-10, and these elements may not be discussed in detail herein with reference to each of Figs. 1-10. Similarly, all elements may not be labeled in each of Figs. 1-10, but reference numerals associated therewith may be utilized herein for consistency. Elements, components, and/or features that are discussed herein with reference to one or more of Figs. 1-10 may be included in and/or utilized with any of Figs. 1-10 without departing from the scope of the present disclosure.

In general, elementsthat are likely to be included in agiven (i.e., a particular) example are illustrated in solid lines, while elements that are optional to a given example are illustrated in dashed lines. However, elements that are shown in solid lines are not essential to all examples, and an element shown in solid lines may be omitted from a particular example.

Fig. 1 is a schematic illustration of examples of an aircraft 10 that may include and/or utilize an air distribution nozzle 100, according to the present disclosure. Aircraft 10 also may include an air supply conduit 30, which may be configured to provide a motive fluid flow 70 to air distribution nozzle 100. Air distribution nozzles 100, according to the present disclosure, may be configured to control, to direct, and/or to regulate fluid, or air, flow within, or within an interior 11 of, aircraft 10 in any suitable manner. Examples of air distribution nozzles 100 are disclosed herein.

In some examples, air distribution nozzles 100 may be positioned within a cockpit 20 of aircraft 10. In some such examples, air distribution nozzles 100 may be configured to generate an outlet fluid flow 90 that may function as an air curtain 98. In some such examples, air curtain 98 may flow between a pilot seating area 12 and a co-pilot seating area 14 of aircraft 10, such as to permit, facilitate, and/or enable independent environmental control between the pilot seating area and the co-pilot seating area. Stated another way, air curtain 98 may restrict airflow between pilot seating area 12 and co-pilot seating area 14, thereby permitting independent adjustment of a pilot environmental control 13 and a co-pilot environmental control 15 such that, for example, a pilot temperature within pilot seating area 12 may be maintained different and/or independent from a co-pilot temperature within co-pilot seating area 14.

In some examples, air curtain 98 may decrease a potential for cross-contamination between pilot seating area 12 and co-pilot seating area 14. Stated another way, air curtain 98 may entrain airborne contaminants, such as particulate material, bacteria, and/or viruses, thereby decreasing flow of the airborne contaminants between pilot seating area 12 and co-pilot seating area 14.

Air distribution nozzle 100 may include a sensor 282, which may be configured to detect one or more properties of air proximate and/or within air distribution nozzle 100. In some such examples, aircraft 10 further may include an environmental control system 40, which may be in communication with sensor 282. In some such examples, environmental control system 40 may be configured to control a flow rate of motive fluid flow 70 based, at least in part, on a sensor reading from sensor 282.

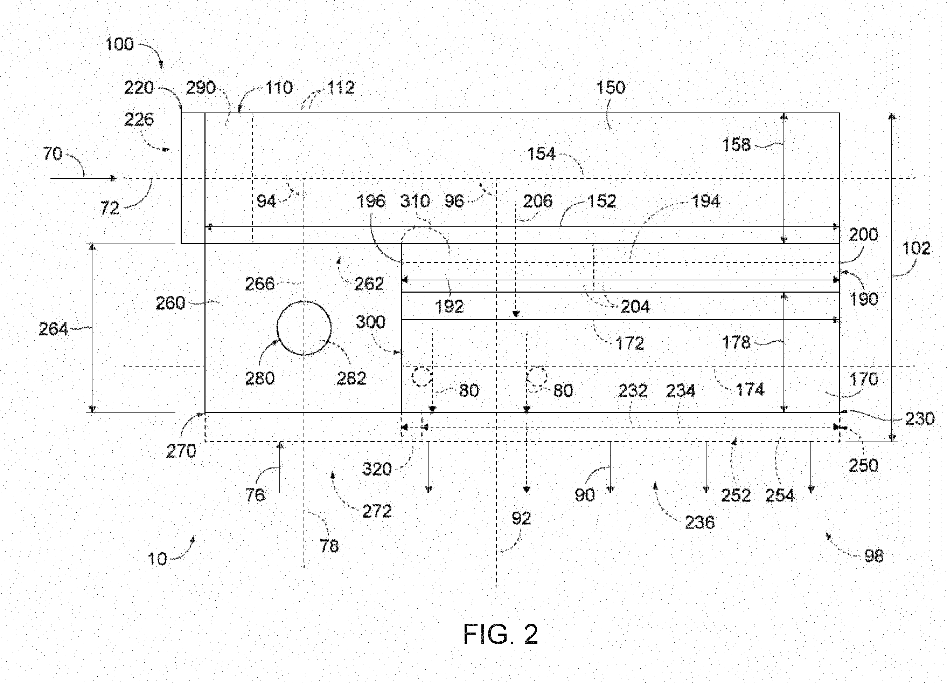

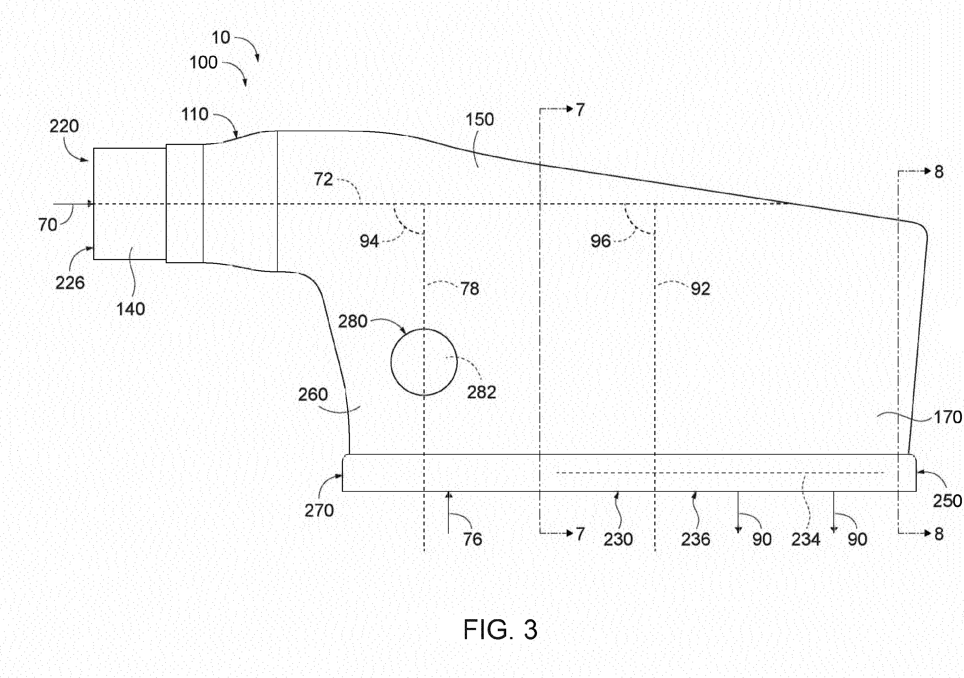

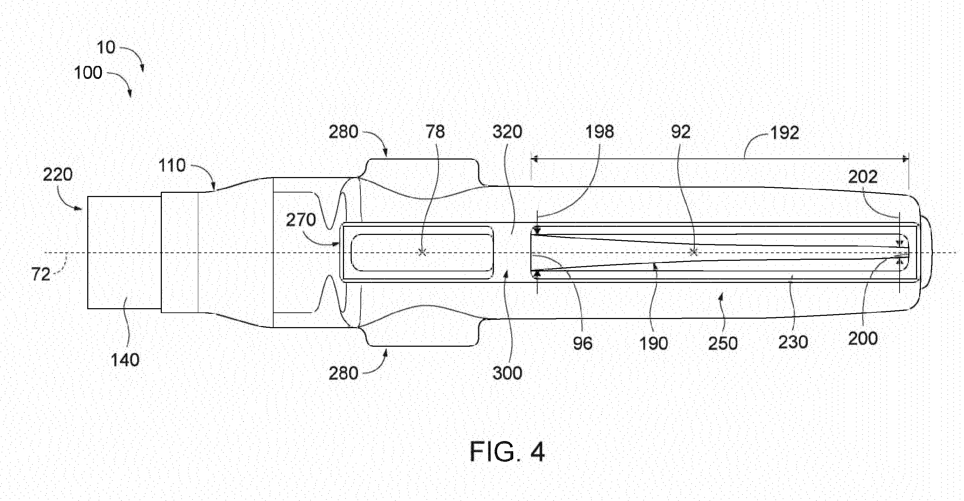

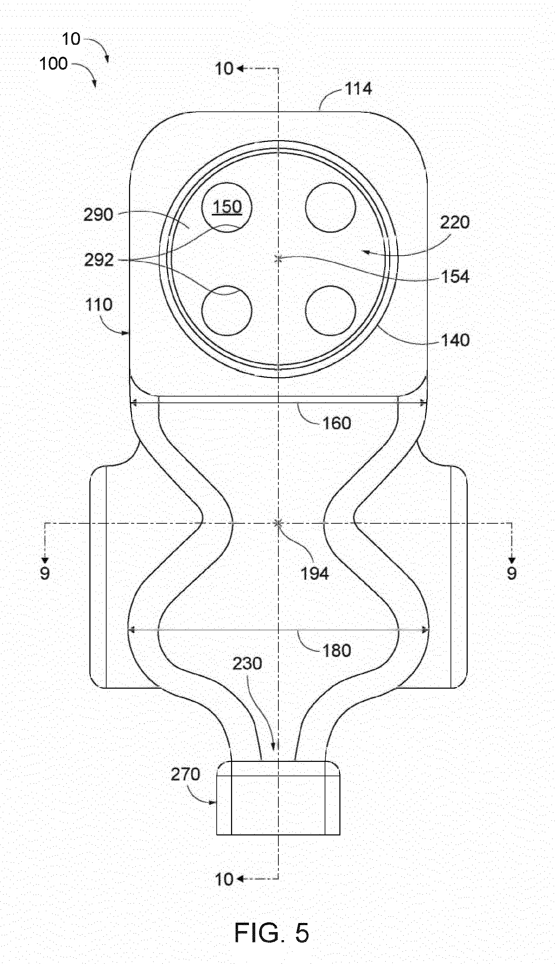

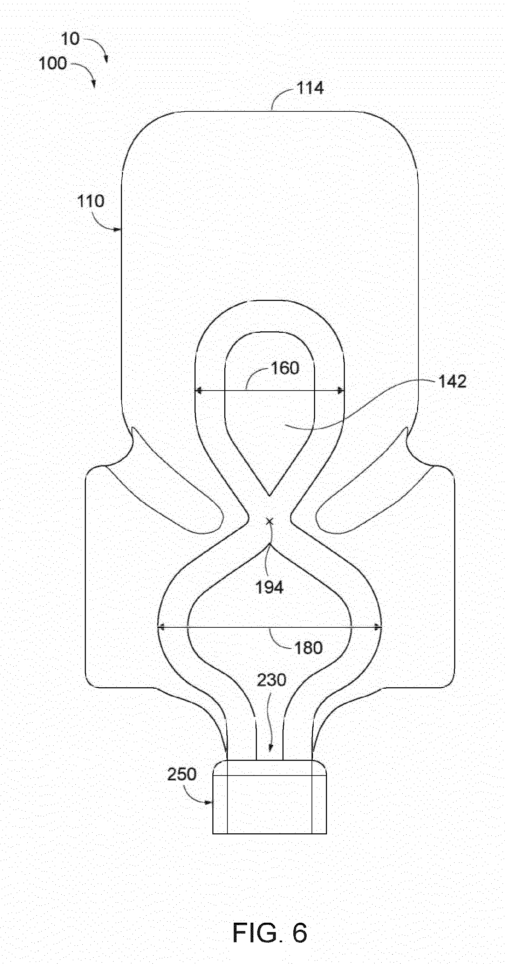

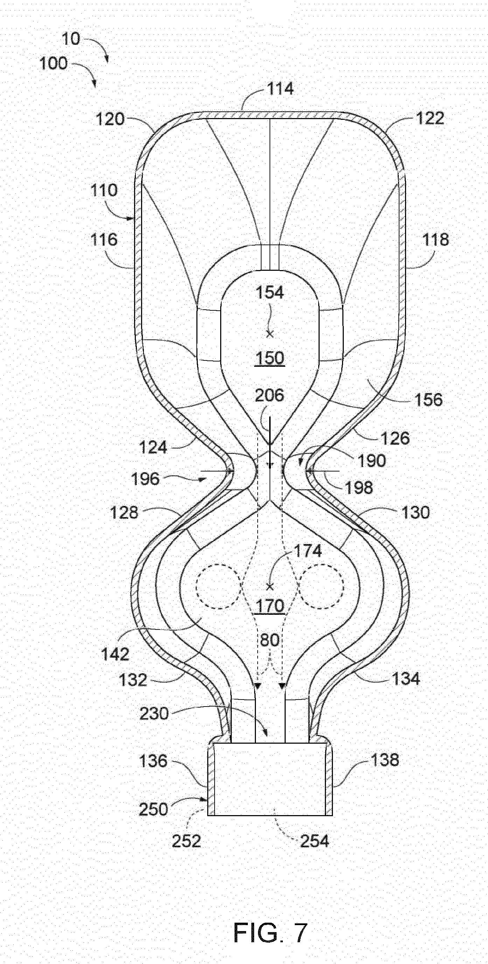

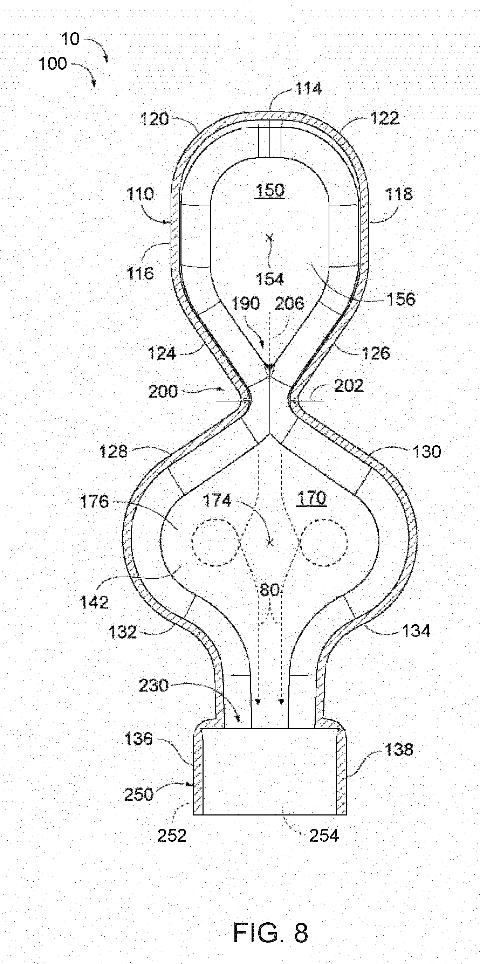

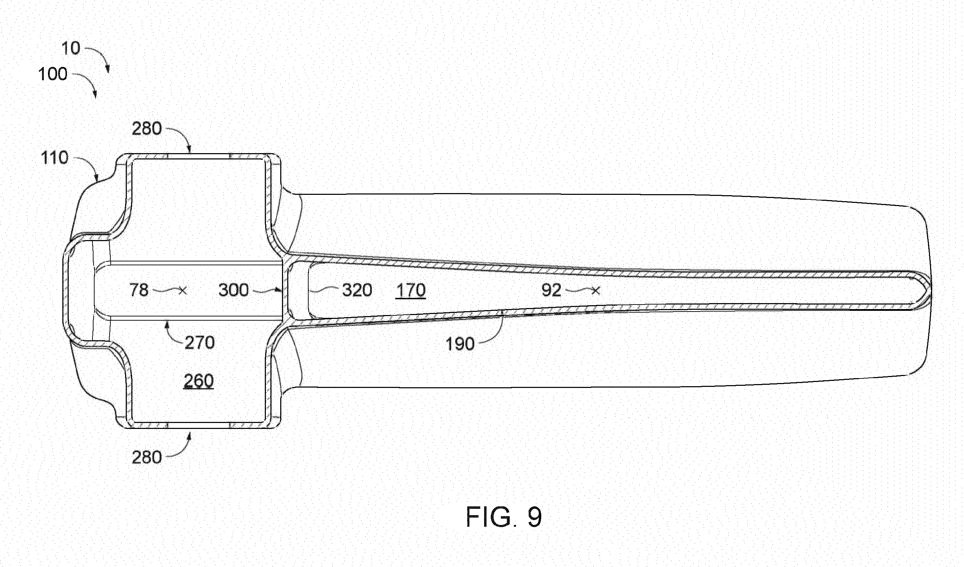

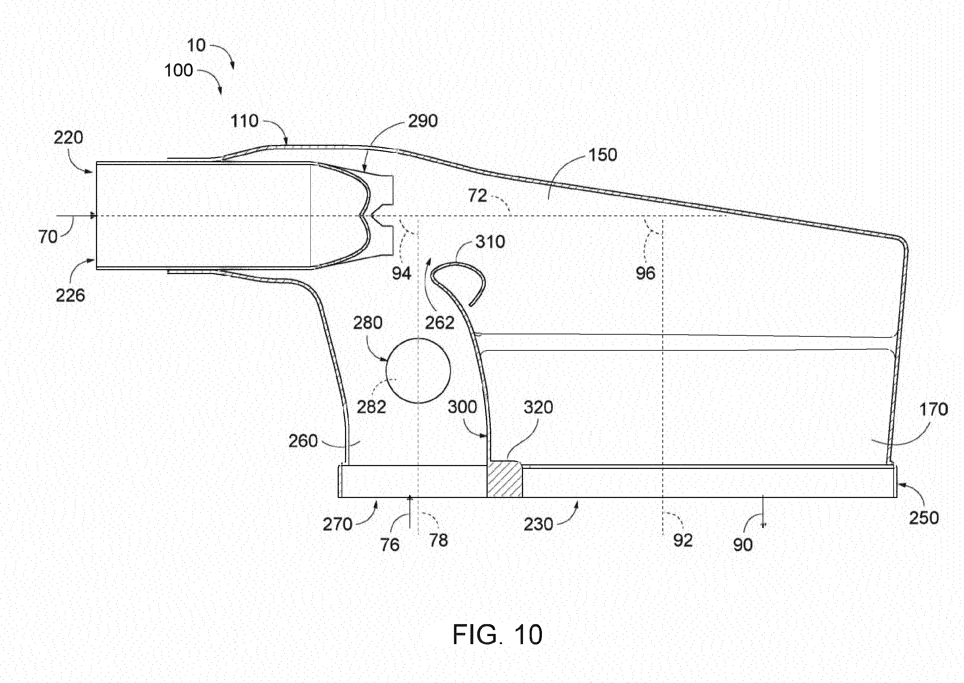

Fig. 2 is a schematic illustration of examples of an air distribution nozzle 100 according to the present disclosure. Fig. 3 is a less schematic side view illustrating an example of an air distribution nozzle 100 according to the present disclosure, while Figs. 4-9 provide additional views of air distribution nozzle 100 of Fig. 3. More specifically, Fig. 4 is a bottom view of the air distribution nozzle of Fig. 3, Fig. 5 is a left end view of the air distribution nozzle of Fig. 3, Fig. 6 is a right end view of the air distribution nozzle of Fig. 3, Fig. 7 is a cross-sectional view of the air distribution nozzle of Fig. 3 taken along line 7-7 of Fig. 3, Fig. 8 is a cross-sectional view of the air distribution nozzle of Fig. 3 taken along line 8-8 of Fig. 3, Fig. 9 is a cross-sectional view of the air distribution nozzle of Fig. 3 taken along line 9-9 of Fig. 5, and Fig. 10 is a cross-sectional view of the air distribution nozzle of Fig. 3 taken along line 10-10 of Fig. 5.

Air distribution nozzles 100 of Figs. 2-10 may include and/or be more detailed illustrations of air distribution nozzles 100 of Fig. 1. With this in mind, any of the structures, functions, and/or features of air distribution nozzles 100 of Figs. 2-10 may be included in and/or utilized with aircraft 10 of Fig. 1 and/or air distribution nozzles 100 thereof without departing from the scope of the present disclosure. Similarly, any of the structures, functions, and/or features of aircraft 10 of Fig. 1 may be utilized with air distribution nozzles 100 of Figs. 2-10.

As illustrated in Fig. 2, and collectively by Figs. 3-10, air distribution nozzles 100 include an elongate inlet chamber 150 and an elongate outlet chamber 170. Elongate inlet chamber 150 extends along an elongate inlet chamber length 152, as illustrated in Fig. 2, and elongate outlet chamber 170 extends, or also extends, at least partially along the elongate inlet chamber length. Air distribution nozzles 100 also include an elongate slot 190, which also may be referred to herein and/or may be a tapered elongate slot 190. Elongate slot 190 extends between, and fluidly interconnects, elongate inlet chamber 150 and elongate outlet chamber 170.

Air distribution nozzles 100 further include a motive fluid inlet port 220, which extends into elongate inlet chamber 150, and an elongate outlet port 230, which extends from elongate outlet chamber 170. Motive fluid inlet port 220 is configured to receive motive fluid flow 70 along a motive flow axis 72 and/or in a motive flow direction (as indicated by the arrow on motive fluid flow 70).

Air distribution nozzles 100 also include a suction inlet chamber 260. Suction inlet chamber 260 extends from a suction inlet port 270 to elongate inlet chamber 150. Suction inlet port 270 opens into suction inlet chamber 260 and is configured to receive a suction inlet fluid flow 76 along a suction inlet flow axis 78. Additionally or alternatively, suction inlet port 270 may be configured to receive suction inlet fluid flow 76 in and/or along a suction inlet flow direction (as indicated by the arrow on suction inlet fluid flow 76), which may be oriented at a suction flow skew angle 94 relative to motive flow axis 72.

Elongate outlet port 230 is configured to discharge outlet fluid flow 90 along an outlet flow axis 92 and/or in an outlet flow direction (as indicated by the arrow on outlet fluid flow 90). Outlet flow axis 92 is oriented at an outlet flow skew angle 96 relative to motive flow axis 72. Stated another way, the motive flow direction may be referred to herein as being at outlet flow skew angle 96 relative to the outlet flow direction. Outlet fluid flow 90 includes both motive fluid flow 70 and suction inlet fluid flow 76.

Air distribution nozzles 100 further include a sensor port 280. Sensor port 280 extends and/or opens into suction inlet chamber 260 and may be configured to receive, to retain, and/or to hold a sensor 282. Sensor 282 may be configured to measure one or more properties of suction inlet fluid flow 76, as discussed in more detail herein.

During operation of air distribution nozzles 100 and/or of aircraft 10 that include air distribution nozzles 100, motive fluid flow 70 may be provided to elongate inlet chamber 150 via motive fluid inlet port 220, in the motive flow direction, and/or along motive flow axis 72. This may include providing motive fluid flow 70 via air supply conduit 30 of Fig. 1. Motive fluid flow 70 may be redirected, within elongate inlet chamber 150 to generate a slot fluid flow 206 that flows through elongate slot 190 and/or into elongate outlet chamber 170. Within elongate outlet chamber 170, a pair of counter-rotating vortices 80 may be generated from and/or within slot fluid flow 206. Outlet fluid flow 90, which may be generated from counter-rotating vortices 80, then may be discharged from elongate outlet port 230 along outlet flow axis 92 and/or in the outlet flow direction.

Generation of counter-rotating vortices 80 may increase a uniformity, may increase a linearity, and/or may increase a laminarity of outlet fluid flow 90. Stated another way, air distribution nozzles 100 may discharge a linear outlet fluid flow 90 and/or a laminar outlet fluid flow 90. Such a configuration may make outlet fluid flow 90 suitable for certain applications, such as air curtain 98, which is discussed in more detail herein.

Supply of motive fluid flow 70 to elongate inlet chamber 150 via motive fluid inlet port 220 also may generate a suction within suction inlet chamber 260, such as via the Venturi effect. Stated another way, air distribution nozzles 100, according to the present disclosure, may function as, may be referred to herein as, and/or may be eductor pumps, venturi pumps, and/or ejector pumps, with motive fluid flow 70 providing a driving force for flow of suction inlet fluid flow 76 into the ejector pumps. The ejector pumps may mix motive fluid flow 70 and suction inlet fluid flow 76 therewithin, such as within elongate inlet chamber 150 and/or within elongate outlet chamber 170, and the combination of motive fluid flow 70 and suction inlet fluid flow 76 may be discharged from the ejector pumps as outlet fluid flow 90.

With the above in mind, air distribution nozzles 100 may be referred to herein as being configured to redirect motive fluid flow 70 from the motive flow direction to the outlet flow direction and also to redirect suction inlet fluid flow 76 from the suction inlet flow direction to the outlet flow direction, such as to produce and/or generate outlet fluid flow 90. This redirection may be such that outlet fluid flow 90 is uniform, or at least substantially uniform, along an outlet port length 232 of elongate outlet port 230, such that the outlet fluid flow is laminar, and/or such that the outlet fluid flow is at least substantially uniformly directed in the outlet flow direction. Additionally or alternatively, this redirection may be such that the outlet flow direction is oriented at the outlet flow skew angle relative to the motive flow direction.

Inclusion of suction inlet port 270, suction inlet chamber 260, and/or sensor port 280 within air distribution nozzles 100, according to the present disclosure, may provide several benefits over conventional air distribution nozzles that do not include suction inlet port 270, suction inlet chamber 260, and/or sensor port 280. In some examples, and as discussed, sensor 282, which may be positioned within sensor port 280, may be configured to measure one or more properties of suction inlet fluid flow 76, such as a temperature, a pressure, and/or a moisture content of the suction inlet fluid flow. Environmental control system 40 of Fig. 1 may receive the one or more properties of suction inlet fluid flow 76 and/or may utilize this information to control one or more aspects of an environment within interior 11 of aircraft 10. In some examples, sensor 282 may measure the temperature of suction inlet fluid flow 76 and a flow rate of motive fluid flow 70 may be controlled, regulated, and/or adjusted based, at least in part, on the temperature of the suction inlet fluid flow. Such a configuration may permit and/or facilitate accurate control of the temperature within interior 11 without a need for additional and/or separate sensors within interior 11.

Motive flow axis 72 may have and/or define any suitable orientation, or relative orientation. In some examples, motive flow axis 72 may be perpendicular, or at least substantially perpendicular, to a cross-section, to a transverse cross-section, and/or to a surface that extends across a motive fluid inlet opening 226 of motive fluid inlet port 220. In other examples, motive flow axis 72 may be parallel, or at least substantially parallel, to an elongate inlet chamber longitudinal axis 154 of elongate inlet chamber 150, as illustrated in Fig. 2.

Outlet flow axis 92 may have and/or define any suitable orientation, or relative orientation. In some examples, outlet flow axis 92 may be perpendicular, or at least substantially perpendicular, to a cross-section, to a transverse cross-section, and/or to a surface that extends across an outlet opening 236 of elongate outlet port 230. In other examples, outlet flow axis 92 may be perpendicular, or at least substantially perpendicular, to an outlet port longitudinal axis 234 of elongate outlet port 230.

Suction inlet flow axis 78 may have and/or define any suitable orientation, or relative orientation. In some examples, suction inlet flow axis 78 may be perpendicular, or at least substantially perpendicular, to suction inlet port 270 and/or to a cross-section, to a transverse cross-section, and/or to a surface that extends across a suction inlet opening 272 of suction inlet port 270. In other examples, suction inlet flow axis 78 may be parallel, or at least substantially parallel, to a suction inlet chamber longitudinal axis 266 of suction inlet chamber 260.

Suction flow skew angle 94 and/or outlet flow skew angle 96, which collectively may be referred to herein as angles 94/96 may include and/or be any suitable angle between motive flow axis 72 and suction inlet flow axis 78 and/or outlet flow axis 92, respectively. As examples, angles 94/96 may be at least 45 degrees, at least 50 degrees, at least 55 degrees, at least 60 degrees, at least 65 degrees, at least 70 degrees, at least 75 degrees, at least 80 degrees, at least 85 degrees, at least 90 degrees, at most 135 degrees, at most 130 degrees, at most 125 degrees, at most 120 degrees, at most 115 degrees, at most 110 degrees, at most 105 degrees, at most 100 degrees, at most 95 degrees, and/or at most 90 degrees. In some examples, angles 94/96 may be equal, or at least substantially equal, to 90 degrees.

In other examples, suction inlet flow axis 78 and outlet flow axis 92 may be parallel to one another. Additionally or alternatively, suction flow skew angle 94 may be within a threshold angle difference of outlet flow skew angle 96. Examples of the threshold angle difference include angle differences of at least 1 degree, at least 2.5 degrees, at least 5 degrees, at least 10 degrees, at least 15 degrees, at most 30 degrees, at most 25 degrees, at most 20 degrees, at most 15 degrees, at most 10 degrees, and/or at most 5 degrees.

Motive fluid inlet port 220 may have and/or define any suitable shape, configuration, and/or conformation. In some examples, motive fluid inlet port 220 may include and/or be a circular, an at least partially circular, and/or an at least substantially circular motive fluid inlet port 220. In other examples, motive fluid inlet port 220 may be shaped, sized, and/or oriented to direct motive fluid flow 70 along, or at least substantially along, elongate inlet chamber longitudinal axis 154. In yet other examples, a cross-section of motive fluid inlet port 220, a transverse cross-section of motive fluid inlet port 220, and/or motive fluid inlet opening 226 may be perpendicular, or at least substantially perpendicular, to elongate inlet chamber longitudinal axis 154. Such a configuration may increase a uniformity of motive fluid flow 70 into and/or within elongate inlet chamber 150.

In some examples, and as illustrated in dashed lines in Fig. 2 and in solid lines in Figs. 5 and 10, air distribution nozzles 100 and/or motive fluid inlet ports 220 thereof may include and/or may be associated with a motive fluid acceleration structure 290. Motive fluid acceleration structure 290, when present, may be adapted, configured, sized, and/or shaped to accelerate, or increase a velocity of, motive fluid flow 70 as the motive fluid flow exits motive fluid inlet port 220 and/or enters elongate inlet chamber 150. Examples of motive fluid acceleration structure 290 include a region of reduced cross-sectional area, an at least partially tapered region, a venturi, an orifice, and/or a plurality of orifices. In some examples, and as illustrated in Fig. 5, motive fluid acceleration structure 290 includes a venturi with four orifices 292. In some examples, motive fluid acceleration structure 290 may be configured to accelerate motive fluid flow 70 to, or an amount sufficient to, provide a target, or a desired, suction inlet flow rate for suction inlet fluid flow 76.

Elongate outlet port 230 may have and/or define any suitable shape, configuration, and/or conformation. As examples, elongate outlet port 230 may include and/or be a rectangular elongate outlet port 230, an at least substantially rectangular elongate outlet port 230, and/or a rectangular elongate outlet port 230 with rounded corners. In some examples, outlet port longitudinal axis 234 may extend parallel, or at least substantially parallel, to an outlet chamber longitudinal axis 174 of elongate outlet chamber 170.

As discussed, elongate slot 190 may be tapered. Such a configuration may increase a uniformity of flow, or of a flow rate, of slot fluid flow 206, such as by increasing the uniformity of the flow through the elongate slot and/or along a slot length 192 of elongate slot 190.

Elongate slot 190 may have and/or define any suitable shape, configuration, and/or conformation that tapers along slot length 192 thereof, that extends between elongate inlet chamber 150 and elongate outlet chamber 170, and/or that fluidly interconnects elongate inlet chamber 150 and elongate outlet chamber 170. In some examples, elongate slot 190 may extend, or may continuously extend, between a first slot end 196 and a second slot end 200. In some examples, and as illustrated in Fig. 2, elongate slot 190 may include a plurality of slot segments 204. In such a configuration, each slot segment of the plurality of slot segments may fluidly interconnect a given region of elongate inlet chamber 150 with a corresponding region of elongate outlet chamber 170.

Elongate slot 190 may taper in any suitable manner. In some examples, and as perhaps best illustrated in Fig. 4, elongate slot 190 may define a first slot width 198 at first slot end 196 and a second slot width 202 at second slot end 200. Second slot width 202 may differ from first slot width 198, and both first slot width 198 and second slot width 202 may be measured in a direction that is perpendicular, or at least substantially perpendicular, to an elongate axis, or slot length 192, of elongate slot 190. Additionally or alternatively, first slot width 198 and/or second slot width 202 may be measured in a direction that is perpendicular, or at least substantially perpendicular, to flow of slot fluid flow 206 through elongate slot 190.

In some examples, and as illustrated, first slot end 196 may be relatively proximate to motive fluid inlet port 220 and/or second slot end 200 may be relatively distal from motive fluid inlet port 220. In some examples, first slot width 198 may be greater than second slot width 202. In some examples, elongate slot 190 may taper, taper monotonically, taper linearly, and/or arcuately taper from first slot width 198 to second slot width 202 and/or between first slot width 198 and second slot width 202.

It is within the scope of the present disclosure that first slot width 198 may differ from second slot width 202 by any suitable amount and/or proportion. As examples, a ratio of first slot width 198 to second slot width 202 may be at least 1.1, at least 1.2, at least 1.3, at least 1.4, at least 1.5, at least 1.6, at least 1.7, at least 1.8, at least 1.9, at least 2.0, at most 4.0, at most 3.8, at most 3.6, at most 3.4, at most 3.2, at most 3.0, at most 2.9, at most 2.8, at most 2.7, at most 2.6, at most 2.5, at most 2.4, at most 2.3, at most 2.2, at most 2.1, at most 2.0, at most 1.9, at most 1.8, at most 1.7, at most 1.6, and/or at most 1.5.

Examples of first slot width 198 include widths of at least 1.5 millimeters (mm), at least 1.6 mm, at least 1.7 mm, at least 1.8 mm, at least 1.9 mm, at least 2 mm, at least 2.1 mm, at least 2.2 mm, at least 2.3 mm, at least 2.4 mm, at most 3 mm, at most 2.9 mm, at most 2.8 mm, at most 2.7 mm, at most 2.6 mm, at most 2.5 mm, at most 2.4 mm, at most 2.3 mm, at most 2.2 mm, at most 2.1 mm, and/or at most 2 mm. Examples of second slot width 202 include widths of at least 0.5 mm, at least 0.6 mm, at least 0.7 mm, at least 0.8 mm, at least 0.9 mm, at least 1 mm, at least 1.1 mm, at least 1.2 mm, at least 1.3 mm, at least 1.4 mm, at most 2 mm, at most 1.9 mm, at most 1.8 mm, at most 1.7 mm, at most 1.6 mm, at most 1.5 mm, at most 1.4 mm, at most 1.3 mm, at most 1.2 mm, at most 1.1 mm, and/or at most 1 mm.

Air distribution nozzles 100 and/or components thereof may have and/or define any suitable dimension and/or dimensions, such as may permit and/or facilitate operation and/or utilizing of the air distribution nozzles in a target installation, such as within aircraft 10 of Fig. 1, and/or in any desired manner. In some examples, air distribution nozzles 100 may be utilized in environments that are relatively space constrained, such as aircraft 10.

In some examples, elongate inlet chamber 150 may have and/or define elongate inlet chamber length 152, as illustrated in Fig. 2. In some examples, elongate inlet chamber length 152 may be measured along elongate inlet chamber longitudinal axis 154 and/or may be a maximum dimension of elongate inlet chamber 150, such as may be measured along the elongate inlet chamber longitudinal axis. Additionally or alternatively, elongate outlet chamber 170 may have and/or define an outlet chamber length 172, as also illustrated in Fig. 2. In some examples, outlet chamber length 172 may be measured along outlet chamber longitudinal axis 174 and/or may be a maximum dimension of elongate outlet chamber 170, such as may be measured along the outlet chamber longitudinal axis.

Elongate inlet chamber length 152 may differ from, or be greater than, outlet chamber length 172. As examples, a ratio of elongate inlet chamber length 152 to outlet chamber length 172 may be at least 1.0, at least 1.1, at least 1.2, at least 1.3, at least 1.4, at least 1.5, at most 2.0, at most 1.9, at most 1.8, at most 1.7, at most 1.6, at most 1.5, at most 1.4, at most 1.3, and/or at most 1.2. Examples of elongate inlet chamber length 152 include lengths of at least 150 mm, at least 175 mm, at least 200 mm, at least 225 mm, at least 250 mm, at least 275 mm, at least 300 mm, at least 325 mm, at least 350 mm, at least 375 mm, at least 400 mm, at least 425 mm, at least 450 mm, at least 475 mm, at least 500 mm, at most 600 mm, at most 575 mm, at most 550 mm, at most 525 mm, at most 500 mm, at most 450 mm, at most 425 mm, at most 400 mm, at most 375 mm, at most 350 mm, at most 325 mm, and/or at most 300 mm.

In some examples, elongate inlet chamber 150 may have and/or define an elongate inlet chamber width, or an average elongate inlet chamber width, 160, as perhaps best illustrated in Figs. 5-6. In some examples, elongate inlet chamber width 160 may be measured perpendicular, or at least substantially perpendicular, to elongate inlet chamber longitudinal axis 154, to motive flow axis 72, to a slot longitudinal axis 194 of elongate slot 190, and/or to elongate inlet chamber length 152, as perhaps best illustrated in Fig. 2. Additionally or alternatively, elongate outlet chamber 170 may have and/or define an outlet chamber width, or an average outlet chamber width, 180, as also perhaps best illustrated in Figs. 5-6. In some examples, outlet chamber width 180 may be measured perpendicular, or at least substantially perpendicular, to outlet chamber longitudinal axis 174, to outlet flow axis 92, to slot longitudinal axis 194, and/or to outlet chamber length 172, as perhaps best illustrated in Fig. 2. Additionally or alternatively, outlet chamber width 180 may be measured parallel to elongate inlet chamber width 160. Examples of elongate inlet chamber width 160 and/or of outlet chamber width 180 include widths of at least 20 mm, at least 25 mm, at least 30 mm, at least 35 mm, at least 40 mm, at least 45 mm, at least 50 mm, at most 75 mm, at most 70 mm, at most 65 mm, at most 60 mm, at most 55 mm, at most 50 mm, at most 45 mm, at most 40 mm, and/or at most 35 mm.

Suction inlet chamber 260 may be shaped, sized, positioned, and/or oriented to direct suction inlet fluid flow 76 into elongate inlet chamber 150 such that suction inlet fluid flow 76 combines and/or mixes with motive fluid flow 70 in and/or within elongate inlet chamber 150. As discussed, supply of motive fluid flow 70 to motive fluid inlet port 220 may produce and/or generate suction, or a vacuum, that provides a motive force for flow of suction inlet fluid flow 76 into suction inlet chamber 260 via suction inlet port 270 and/or through the suction inlet chamber.

Suction inlet port 270 may have any suitable position and/or orientation within air distribution nozzles 100. In some examples, suction inlet port 270 may face in the same, or in at least substantially the same, direction as elongate outlet port 230. In some more specific examples, suction inlet port 270 may be coplanar, at least substantially coplanar, parallel, and/or at least substantially parallel with elongate outlet port 230.

Suction inlet chamber 260 may define, or may extend along, a suction inlet chamber length 264. Suction inlet chamber length 264 may extend parallel, or at least substantially parallel, to suction inlet chamber longitudinal axis 266 and/or to suction inlet flow axis 78. Additionally or alternatively, suction inlet chamber length 264 may extend perpendicular, or at least substantially perpendicular, to elongate inlet chamber length 152 and/or to elongate outlet chamber length 172.

Suction inlet chamber length 264 may have and/or define any suitable dimension, or relative dimension. In some examples, suction inlet chamber length 264 may be a first threshold suction inlet chamber length multiple of an inlet chamber height 158 of elongate inlet chamber 150. Examples of the first threshold suction inlet chamber length multiple include multiples of at least 0.5, at least 0.6, at least 0.7, at least 0.8, at least 0.9, at least 1.0, at most 1.5, at most 1.4, at most 1.3, at most 1.2, at most 1.1, at most 1.0, at most 0.9, at most 0.8, and/or at most 0.7. In other examples, suction inlet chamber length 264 may be a second threshold suction inlet chamber length multiple of an outlet chamber height 178 of elongate outlet chamber 170. Examples of the second threshold suction inlet chamber length multiple include multiples of at least 0.5, at least 0.6, at least 0.7, at least 0.8, at least 0.9, at least 1.0, at most 1.5, at most 1.4, at most 1.3, at most 1.2, at most 1.1, and/or at most 1.0.

Air distribution nozzles 100 may have and/or define an overall nozzle height, or an average overall nozzle height, 102, as perhaps best illustrated in Fig. 2. In some examples, overall nozzle height 102 may be measured perpendicular, or at least substantially perpendicular, to elongate inlet chamber longitudinal axis 154, to elongate inlet chamber length 152, to outlet chamber longitudinal axis 174, to outlet chamber length 172, to elongate inlet chamber width 160, to outlet chamber width 180, and/or to slot longitudinal axis 194. Additionally or alternatively, overall nozzle height 102 may be measured parallel, or at least substantially parallel, to outlet flow axis 92, to suction inlet chamber longitudinal axis 266, and/or to suction inlet chamber length 264 of suction inlet chamber 260. Examples of overall nozzle height 102 include heights of at least 75 mm, at least 80 mm, at least 85 mm, at least 90 mm, at least 95 mm, at least 100 mm, at least 105 mm, at least 110 mm, at least 115 mm, at least 120 mm, at most 150 mm, at most 145 mm, at most 140 mm, at most 135 mm, at most 130 mm, at most 125 mm, at most 120 mm, at most 115 mm, at most 110 mm, and/or at most 105 mm.

With continued reference to Fig. 2, elongate inlet chamber 150 may have and/or define inlet chamber height 158. Additionally or alternatively, elongate outlet chamber 170 may have and/or define outlet chamber height 178. Inlet chamber height 158 and outlet chamber height 178 each may be a, a different, and/or a corresponding fraction, or percentage, of overall nozzle height 102. Examples of the fraction include at least 10%, at least 15%, at least 20%, at least 25%, at least 30%, at least 35%, at least 40%, at least 45%, at least 50%, at most 75%, at most 60%, at most 55%, at most 50%, at most 45%, at most 40%, at most 35%, at most 30%, and/or at most 25%.

Elongate inlet chamber 150 may include any suitable structure, conformation, and/or configuration that extends along elongate inlet chamber length 152, that may receive motive fluid flow 70 from motive fluid inlet port 220, and/or that may provide slot fluid flow 206 to elongate outlet chamber 170 via elongate slot 190. In some examples, elongate inlet chamber 150 may be shaped to direct motive fluid flow 70 toward and/or into elongate slot 190.

In some examples, and as perhaps best illustrated by Figs. 7 and 8, a transverse cross-sectional area 156 of elongate inlet chamber 150 may decrease along motive flow axis 72 and/or in the motive flow direction. In some such examples, a maximum transverse cross-sectional area 156 of elongate inlet chamber 150 may be relatively proximate motive fluid inlet port 220, while a minimum transverse cross-sectional area 156 of the elongate inlet chamber may be relatively distal the motive fluid inlet port. In some such examples, transverse cross-sectional area 156 of elongate inlet chamber 150 may decrease, or monotonically decrease, along the motive flow axis and/or in the motive flow direction. In some such examples, maximum transverse cross-sectional area 156 of elongate inlet chamber 150 may be a threshold inlet chamber area multiple of minimum transverse cross-sectional area 156 of the elongate inlet chamber. Examples of the threshold inlet chamber area multiple include multiples of at least 1.05, at least 1.1, at least 1.15, at least 1.2, at least 1.25, at least 1.3, at least 1.35, at least 1.4, at least 1.5, at least 1.6, at least 1.7, at least 1.8, at least 1.9, at most 3.0, at most 2.9, at most 2.8, at most 2.7, at most 2.6, at most 2.5, at most 2.4, at most 2.3, at most 2.2, at most 2.1, at most 2.0, at most 1.9, at most 1.8, at most 1.7, at most 1.6, and/or at most 1.5. Such a configuration may increase uniformity of flow, or of the flow rate, of slot fluid flow 206, such as by increasing the uniformity of the flow along slot length 192 of elongate slot 190.

In some examples, inlet chamber height 158, which also may be referred to herein as a height 158 of elongate inlet chamber 150, may decrease, or monotonically decrease, along motive flow axis 72 and/or in the motive flow direction. In some such examples, a maximum value of inlet chamber height 158, which also may be referred to herein as a maximum height of elongate inlet chamber 150, may be at least a threshold inlet chamber height multiple of a minimum value of inlet chamber height 158, which also may be referred to herein as a minimum height of the elongate inlet chamber. Examples of the threshold inlet chamber height multiple include multiples of at least 1.05, at least 1.1, at least 1.15, at least 1.2, at least 1.25, at least 1.3, at least 1.35, at least 1.4, at least 1.5, at least 1.6, at least 1.7, at least 1.8, at least 1.9, at most 3.0, at most 2.9, at most 2.8, at most 2.7, at most 2.6, at most 2.5, at most 2.4, at most 2.3, at most 2.2, at most 2.1, at most 2.0, at most 1.9, at most 1.8, at most 1.7, at most 1.6, and at most 1.5. Such a configuration also may increase uniformity of flow, or of the flow rate, of slot fluid flow 206, such as by increasing the uniformity of the flow along slot length 192 of elongate slot 190.

In some examples, elongate inlet chamber width 160, which also may be referred to herein as a width 160 of elongate inlet chamber 150, may decrease, or monotonically decrease, along motive flow axis 72 and/or in the motive flow direction. In some such examples, a maximum value of elongate inlet chamber width 160, which also may be referred to herein as a maximum width of elongate inlet chamber 150, may be at least a threshold elongate inlet chamber width multiple of a minimum value of elongate inlet chamber width 160, which also may be referred to herein as a minimum width of the elongate inlet chamber. Examples of the threshold elongate inlet chamber width multiple include multiples of at least 1.05, at least 1.1, at least 1.15, at least 1.2, at least 1.25, at least 1.3, at least 1.35, at least 1.4, at least 1.5, at least 1.6, at least 1.7, at least 1.8, at least 1.9, at most 3.0, at most 2.9, at most 2.8, at most 2.7, at most 2.6, at most 2.5, at most 2.4, at most 2.3, at most 2.2, at most 2.1, at most 2.0, at most 1.9, at most 1.8, at most 1.7, at most 1.6, and at most 1.5. Such a configuration also may increase uniformity of flow, or of the flow rate, of slot fluid flow 206, such as by increasing the uniformity of the flow along slot length 192 of elongate slot 190.

Elongate outlet chamber 170 may include any suitable structure, conformation, and/or configuration that extends along outlet chamber length 172, that may receive slot fluid flow 206 from elongate slot 190, that may generate counter-rotating vortices 80, and/or that may discharge outlet fluid flow 90, such as via elongate outlet port 230. In some examples, elongate outlet chamber 170 may be shaped to generate counter-rotating vortices 80 and/or to direct slot fluid flow 206 toward elongate outlet port 230 as outlet fluid flow 90.

In some examples, and as perhaps best illustrated by Figs. 7 and 8, a transverse cross-sectional area 176 of elongate outlet chamber 170 may decrease along motive flow axis 72 and/or in the motive flow direction. In some such examples, a maximum transverse cross-sectional area 176 of elongate outlet chamber 170 may be relatively proximate motive fluid inlet port 220, while a minimum transverse cross-sectional area 176 of the elongate outlet chamber may be relatively distal the motive fluid inlet port. In some such examples, transverse cross-sectional area 176 of elongate outlet chamber 170 may decrease, or monotonically decrease, along the motive flow axis and/or in the motive flow direction. In some such examples, maximum transverse cross-sectional area 176 of elongate outlet chamber 170 may be a threshold outlet chamber area multiple of minimum transverse cross-sectional area 176 of the elongate outlet chamber. Examples of the threshold outlet chamber area multiple include multiples of at least 1.05, at least 1.1, at least 1.15, at least 1.2, at least 1.25, at least 1.3, at least 1.35, at least 1.4, at least 1.5, at least 1.6, at least 1.7, at least 1.8, at least 1.9, at most 3.0, at most 2.9, at most 2.8, at most 2.7, at most 2.6, at most 2.5, at most 2.4, at most 2.3, at most 2.2, at most 2.1, at most 2.0, at most 1.9, at most 1.8, at most 1.7, at most 1.6, and/or at most 1.5. Such a configuration may increase uniformity of flow, or of the flow rate, of outlet fluid flow 90, such as by increasing the uniformity of the flow along outlet port longitudinal axis 234 of elongate outlet port 230.

In some examples, outlet chamber height 178, which also may be referred to herein as a height 178 of elongate outlet chamber 170, may decrease, or monotonically decrease, along motive flow axis 72 and/or in the motive flow direction. In some such examples, a maximum value of outlet chamber height 178, which also may be referred to herein as a maximum height of elongate outlet chamber 170, may be at least a threshold outlet chamber height multiple of a minimum value of outlet chamber height 178, which also may be referred to herein as a minimum height of the elongate outlet chamber. Examples of the threshold outlet chamber height multiple include multiples of at least 1.05, at least 1.1, at least 1.15, at least 1.2, at least 1.25, at least 1.3, at least 1.35, at least 1.4, at least 1.5, at least 1.6, at least 1.7, at least 1.8, at least 1.9, at most 3.0, at most 2.9, at most 2.8, at most 2.7, at most 2.6, at most 2.5, at most 2.4, at most 2.3, at most 2.2, at most 2.1, at most 2.0, at most 1.9, at most 1.8, at most 1.7, at most 1.6, and at most 1.5. Such a configuration may increase uniformity of flow, or of the flow rate, of outlet fluid flow 90, such as by increasing the uniformity of the flow along outlet port longitudinal axis 234 of elongate outlet port 230.

In some examples, outlet chamber width 180, which also may be referred to herein as a width 180 of elongate outlet chamber 170, may decrease, or monotonically decrease, along motive flow axis 72 and/or in the motive flow direction. In some such examples, a maximum value of outlet chamber width 180, which also may be referred to herein as a maximum width of elongate outlet chamber 170, may be at least a threshold outlet chamber width multiple of a minimum value of outlet chamber width 180, which also may be referred to herein as a minimum width of the elongate outlet chamber. Examplesof the threshold outlet chamber width multiple include multiplesof at least 1.05, at least 1.1, at least 1.15, at least 1.2, at least 1.25, at least 1.3, at least 1.35, at least 1.4, at least 1.5, at least 1.6, at least 1.7, at least 1.8, at least 1.9, at most 3.0, at most 2.9, at most 2.8, at most 2.7, at most 2.6, at most 2.5, at most 2.4, at most 2.3, at most 2.2, at most 2.1, at most 2.0, at most 1.9, at most 1.8, at most 1.7, at most 1.6, and at most 1.5. Such a configuration may increase uniformity of flow, or of the flow rate, of outlet fluid flow 90, such as by increasing the uniformity of the flow along outlet port longitudinal axis 234 of elongate outlet port 230.

As illustrated in dashed lines in Fig. 2 and in solid lines in Figs. 3-8, air distribution nozzles 100 may include an elongate exit structure 250. Elongate exit structure 250, when present, may be configured to receive outlet fluid flow 90 from elongate outlet chamber 170 and/or to discharge the outlet fluid flow from air distribution nozzles 100.

In some examples, elongate exit structure 250 may define a diffuser mounting structure 252. Diffuser mounting structure 252, when present, may be adapted, configured, shaped, and/or sized to receive an air diffuser 254 and/or to operatively attach the air diffuser to a remainder of air distribution nozzles 100. In some examples, air distribution nozzles 100 further include air diffuser 254, which may be operatively attached to diffuser mounting structure 252. Examples of diffuser mounting structure 252 include a region that is shaped to receive air diffuser 254 and/or any suitable fastener. Examplesof air diffuser 254 include a screen, a grill, and/or a louvre. Air diffuser 254, when present, may be configured to diffuse outlet fluid flow 90 and/or to provide a back pressure to elongate outlet chamber 170. Such a configuration may increase a uniformity of flow, or of the flow rate, of outlet fluid flow 90, such as by increasing the uniformity of the flow along outlet port longitudinal axis 234 of elongate outlet port 230.

In some examples, air distribution nozzles 100 may include and/or may be defined by a nozzle body 110. Nozzle body 110, when present, may define elongate inlet chamber 150, elongate outlet chamber 170, elongate slot 190, motive fluid inlet port 220, elongate exit structure 250, suction inlet chamber 260, suction inlet port 270, sensor port 280, and/or motive fluid acceleration structure 290. In some such examples, nozzle body 110 may include and/or be a monolithic, or a unitary, nozzle body 110, such that the nozzle body 110 may be formed and/or defined by an additive manufacturing process. In some examples, and as illustrated in Fig. 2, nozzle body 110 may include and/or be a composite nozzle body 110, which may be defined by at least two, or by only two, body components 112, which may be operatively attached to one another to define the nozzle body. In some examples, body components 112 may be shaped to be mirror, or at least substantially mirror, imagesof one another.

Nozzle body 110 may define the various components of air distribution nozzles 100 in any suitable manner. In some examples, and as perhaps best illustrated in Figs. 7-8, nozzle body 110 may include an upper region 114, which may define an upper surface of elongate inlet chamber 150. In other examples, nozzle body 110 may define a first elongate inlet chamber side region 116, which may define a first side of elongate inlet chamber 150, and/or a second elongate inlet chamber side region 118, which may define a second side of the elongate inlet chamber. In yet other examples, nozzle body 110 may define a first elongate inlet chamber transition region 120, which may transition from upper region 114 to first elongate inlet chamber side region 116, and/or a second elongate inlet chamber transition region 122, which may transition from upper region 114 to second elongate inlet chamber side region 118.

In other examples, nozzle body 110 may define a first elongate inlet chamber tapered region 124, which may taper from first elongate inlet chamber side region 116 to at least partially define a first side of elongate slot 190, and/or a second elongate inlet chamber tapered region 126, which may taper from second elongate inlet chamber side region 118 to at least partially define a second side of elongate slot 190. As illustrated, first elongate inlet chamber tapered region 124 and second elongate inlet chamber tapered region 126 may taper toward one another.

In yet other examples, nozzle body 110 may define a first upper outlet chamber tapered region 128, which may extend from first elongate inlet chamber tapered region 124 and/or may taper away from elongate slot 190, and/or a second upper outlet chamber tapered region 130, which may extend from second elongate inlet chamber tapered region 126 and/or may taper away from the elongate slot. First upper outlet chamber tapered region 128 and second upper outlet chamber tapered region 130 may taper away from one another.

In other examples, nozzle body 110 may define a first lower outlet chamber tapered region 132, which may extend from first upper outlet chamber tapered region 128 to define a first side of elongate outlet port 230, and/or a second lower outlet chamber tapered region 134, which may extend from second upper outlet chamber tapered region 130 to define a second side of elongate outlet port 230. First lower outlet chamber tapered region 132 and second lower outlet chamber tapered region 134 may taper toward one another.

In yet other examples, nozzle body 110 may define a first exit structure side region 136, which may extend from first lower outlet chamber tapered region 132 to define a first side of elongate exit structure 250. In other examples, nozzle body 110 may define a second exit structure side region 138, which may extend from second lower outlet chamber tapered region 134 to define a second side of the elongate exit structure.

In other examples, nozzle body 110 may define an inlet region 140, as perhaps best illustrated in Figs. 3-5. Inlet region 140 may at least partially define motive fluid inlet port 220 and/or may extend from upper region 114, first elongate inlet chamber side region 116, and/or second elongate inlet chamber side region 118.

In yet other examples, nozzle body 110 may define an end region 142, as perhaps best illustrated in Fig. 6. End region 142 may define an inlet-distal end of air distribution nozzle 100. Additionally or alternatively, end region 142 may extend from upper region 114, from first elongate inlet chamber side region 116, from second elongate inlet chamber side region 118, from first elongate inlet chamber transition region 120, from second elongate inlet chamber transition region 122, from first elongate inlet chamber tapered region 124, from second elongate inlet chamber tapered region 126, from first upper outlet chamber tapered region 128, from second upper outlet chamber tapered region 130, from first lower outlet chamber tapered region 132, from second lower outlet chamber tapered region 134, from first exit structure side region 136, and/or from second exit structure side region 138.

As illustrated in dashed lines in Fig. 2 and in solid lines in Figs. 4 and 10, air distribution nozzles 100 may include a separation structure 300. Separation structure 300, when present, may extend between and/or may fluidly isolate elongate outlet chamber 170 and suction inlet chamber 260. In some examples, separation structure 300 may at least partially define, may at least partially bound, and/or may bound a region of elongate outlet chamber 170 and/or of suction inlet chamber 260. In some examples, motive fluid acceleration structure 290 may be shaped and/or positioned to accelerate motive fluid flow 70 prior to flow of motive fluid flow 70 past separation structure 300.

In some examples, and as perhaps best illustrated in Figs. 2 and 10, separation structure 300 may include an aerodynamically shaped surface 310. Aerodynamically shaped surface 310, when present, may at least partially define a region 262 of suction inlet chamber 260 that opens into elongate inlet chamber 150. Stated another way, aerodynamically shaped surface 310 may at least partially define a transition region, such as region 262, between suction inlet chamber 260 and elongate inlet chamber 150. Aerodynamically shaped surface 310 may be shaped to direct suction inlet fluid flow 76 toward and/or into elongate slot 190 and/or elongate outlet chamber 170, such as via elongate inlet chamber 150. Examples of aerodynamically shaped surface 310 and/or of region 262 include a convex surface and/or a Coanda surface.

In some examples, separation structure 300 may include an outlet fluid flow redirection structure 320, as illustrated in Figs. 2 and 10. Outlet fluid flow redirection structure 320 may be positioned within elongate outlet port 230 and/or may at least partially define elongate outlet port 230. Outlet fluid flow redirection structure 320 may be shaped, sized, and/or positioned to direct outlet fluid flow 90 away, or at least partially away, from suction inlet fluid flow 76 and/or from suction inlet port 270. Stated another way, outlet fluid flow redirection structure 320 may be configured to decrease a fraction of outlet fluid flow 90 that is discharged from air distribution nozzle 100 via elongate outlet port 230 and subsequently reenters air distribution nozzle 100 viasuction inlet port 270 as suction inlet fluid flow 76. Some examplesof outlet fluid flow redirection structure 320 includes a projecting region that projects toward elongate outlet port 230 and/or away from suction inlet port 270.

Air distribution nozzles 100, according to the present disclosure, may be relatively simpler and/or may include fewer components when compared to conventional air distribution nozzles. Such conventional air distribution nozzlesoften rely upon internal baffles, flow straighteners, and/or flow guidesto provide the desired level of fluid flow uniformity, thereby making the conventional air distribution nozzles more expensive and/or complex to manufacture, to install, and/or to maintain. With the above in mind, and in view of the illustrationsof air distribution nozzles 100 shown in Figs. 2-10, it is within the scope of the present disclosure that air distribution nozzles 100, according to the present disclosure, may not include, or may be free from, baffles, flow straighteners, and/or flow guides that may extend and/or project within and/or between elongate inlet chamber 150, elongate outlet chamber 170, elongate slot 190, motive fluid inlet port 220, and/or elongate outlet port 230.

As used herein, the terms "selective" and "selectively," when modifying an action, movement, configuration, or other activity of one or more components or characteristics of an apparatus, mean that the specific action, movement, configuration, or other activity is a direct or indirect result of user manipulation of an aspect of, or one or more components of, the apparatus.

As used herein, the terms "adapted" and "configured" mean that the element, component, or other subject matter is designed and/or intended to perform a given function. Thus, the use of the terms"adapted" and "configured" should not be construed to mean that agiven element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in some examples, to at least one, optionally including more than one, A, with no B present (and optionally including entities other than B); in other examples, to at least one, optionally including more than one, B, with no A present (and optionally including entities other than A); in yet other examples, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and Ctogether, Band Ctogether, A, B, and Ctogether, and optionally any of the above in combination with at least one other entity.

As used herein, the phrase, "for example," the phrase, "as an example," and/or simply the term "example," when used with reference to one or more components, features, details, structures, examples, and/or methods according to the present disclosure, are intended to convey that the described component, feature, detail, structure, example, and/or method is an illustrative, non-exclusive example of components, features, details, structures, examples, and/or methods according to the present disclosure. Thus, the described component, feature, detail, structure, example, and/or method is not intended to be limiting, required, or exclusive/exhaustive; and other components, features, details, structures, examples, and/or methods, including structurally and/or functionally similar and/or equivalent components, features, details, structures, examples, and/or methods, are also within the scope of the present disclosure.

As used herein, "at least substantially," when modifying a degree or relationship, may include not only the recited "substantial" degree or relationship, but also the full extent of the recited degree or relationship. Asubstantial amount of a recited degree or relationship may include at least 75% of the recited degree or relationship. For example, an object that is at least substantially formed from a material includes objects for which at least 75%of the objects are formed from the material and also includes objects that are completely formed from the material. As another example, a first length that is at least substantially as long as a second length includes first lengths that are within 75% of the second length and also includes first lengthsthat are as long as the second length.

## Claims

1. An air distribution nozzle (100), comprising:
an elongate inlet chamber (150) extending along an elongate inlet chamber length (152) measured along an elongate inlet chamber longitudinal axis (154) of elongate inlet chamber (150);
an elongate outlet chamber (170) extending at least partially along the elongate inlet chamber length (152);
an elongate slot (190) that extends between, and fluidly interconnects, the elongate inlet chamber (150) and the elongate outlet chamber (170);
a motive fluid inlet port (220) that extends into the elongate inlet chamber (150), wherein the motive fluid inlet port (220) is configured to receive a motive fluid flow (70) along a motive flow axis (72), wherein the motive flow axis (72) is parallel to the elongate inlet chamber longitudinal axis (154);
a suction inlet chamber (260) that extends from a suction inlet port (270) to the elongate inlet chamber (150), wherein the suction inlet port (270) opens into the suction inlet chamber (260), wherein the suction inlet port (270) is configured to receive a suction inlet fluid flow (76) along a suction inlet flow axis (78);
a sensor port (280) that extends into the suction inlet chamber (260); and
an elongate outlet port (230) that extends from the elongate outlet chamber (170), wherein the elongate outlet port (230) is configured to discharge an outlet fluid flow (90), which includes both the motive fluid flow (70) and the suction inlet fluid flow (76), along an outlet flow axis (92), and further wherein the outlet flow axis (92) is oriented at an outlet flow skew angle (96) relative to the motive flow axis (72).

2. The air distribution nozzle (100) of claim 1, further including a motive fluid acceleration structure (290) configured to increase a velocity of the motive fluid flow (70) as the motive fluid flow (70) enters the elongate inlet chamber (150).

3. The air distribution nozzle (100) of claim 2, wherein the motive fluid acceleration structure (290) includes at least one of:
(i) a region of reduced cross-sectional area;
(ii) a tapered or an at least partially tapered region;
(iii) an orifice (292); and
(iv) a plurality of orifices (292).

4. The air distribution nozzle (100) of any one of claims 1-3, further including a separation structure (300) that extends between, and fluidly isolates, the elongate outlet chamber (170) and the suction inlet chamber (260).

5. The air distribution nozzle (100) of claim 4, wherein the separation structure (300) defines, or at least partially defines, at least one of the elongate outlet chamber (170) and the suction inlet chamber (260).

6. The air distribution nozzle (100) of claim 4 or 5, wherein:
the separation structure (300) includes an aerodynamically shaped surface (310) that defines, or at least partially defines, a region (262) of the suction inlet chamber (260) that opens into the elongate inlet chamber (150); and, optionally,
the region (262) of the suction inlet chamber (260) that opens into the elongate inlet chamber (150) includes a convex surface and/or a Coanda surface.

7. The air distribution nozzle (100) of any one of claims 4-6, wherein the separation structure (300) further includes an outlet fluid flow redirection structure (320) shaped to direct the outlet fluid flow (90) away from the suction inlet fluid flow (76).

8. The air distribution nozzle (100) of claim 7, wherein the outlet fluid flow redirection structure (320) is positioned within the elongate outlet port (230) and/or defines, or at least partially defines, the elongate outlet port (230).

9. The air distribution nozzle (100) of any one of claims 1-8, wherein the air distribution nozzle (100) further includes a sensor (282) positioned within the sensor port (280).

10. The air distribution nozzle (100) of any one of claims 1-9, wherein the suction inlet chamber (260) is shaped to direct the suction inlet fluid flow (76) into the elongate inlet chamber (150) such that the suction inlet fluid flow (76) combines with the motive fluid flow (70) within the elongate inlet chamber (150).

11. The air distribution nozzle (100) of any one of claims 1-10, wherein:
the suction inlet port (270) is coplanar with the elongate outlet port (230); and, optionally,
the suction inlet flow axis (78) is parallel, to the outlet flow axis (92).

12. An aircraft (10) comprising:
the air distribution nozzle (100) of any one of claims 1-11; and
an air supply conduit (30) configured to provide the motive fluid flow (70) to the motive fluid inlet port (220); and, optionally, wherein:
the aircraft (10) further includes an environmental control system (40) in communication with the sensor (282), and the environmental control system (40) is configured to control a flow rate of the motive fluid flow (70) based, at least in part, on a sensor reading from the sensor (282).

13. A method of utilizing the air distribution nozzle (100) of any one of claims 1-12, the method comprising:
providing the motive fluid flow (70) to the elongate inlet chamber (150) via the motive fluid inlet port (220) and along a motive flow direction;
redirecting, within the elongate inlet chamber (150), the motive fluid flow (70) to generate a slot fluid flow (206) that flows through the elongate slot (190) and into the elongate outlet chamber (170), thereby generating, within the elongate outlet chamber (170), a pair of counter-rotating vortices (80) within the slot fluid flow (206); and
discharging, from the elongate outlet port (230), the outlet fluid flow (90) along an outlet flow direction.

14. The method of claim 13, wherein, responsive to the providing the motive fluid flow (70), the method further includes generating a suction that draws the suction inlet fluid flow (76) into the suction inlet chamber (260) via the suction inlet port (270).

15. The method of claim 14, wherein the method further includes:
mixing the motive fluid flow (70) with the suction inlet fluid flow (76) within the elongate inlet chamber (150); and/or
measuring a temperature of the suction inlet fluid flow (76) and, optionally, selectively regulating a flow rate of the motive fluid flow (70) based, at least in part, on the temperature of the suction inlet fluid flow (76).

## Patentansprüche

1. Luftverteilerdüse (100), umfassend:
eine langgestreckte Einlasskammer (150), die sich entlang einer Länge (152) der langgestreckten Einlasskammer, gemessen entlang einer Längsachse (154) der langgestreckten Einlasskammer (150), erstreckt;
eine langgestreckte Auslasskammer (170), die sich zumindest teilweise entlang der Länge der langgestreckten Einlasskammer (152) erstreckt;
einen langgestreckten Schlitz (190), der sich zwischen der langgestreckten Einlasskammer (150) und der langgestreckten Auslasskammer (170) erstreckt und diese fluidmäßig miteinander verbindet;
eine Treibfluid-Einlassöffnung (220), die sich in die langgestreckte Einlasskammer (150) erstreckt, wobei die Treibfluid-Einlassöffnung (220) konfiguriert ist, um einen Treibfluidstrom (70) entlang einer Treibstromachse (72) aufzunehmen, wobei
die Treibstromachse (72) parallel zu der Längsachse (154) der langgestreckten Einlasskammer verläuft;
eine Saugeinlasskammer (260), die sich von einem Saugeinlassanschluss (270) zu der langgestreckten Einlasskammer (150) erstreckt, wobei sich der Saugeinlassanschluss (270) in die Saugeinlasskammer (260) öffnet, wobei der Saugeinlassanschluss (270) konfiguriert ist, um einen Saugeinlassfluidstrom (76) entlang einer Saugeinlassstromachse (78) zu empfangen;
einen Sensoranschluss (280), der sich in die Saugeinlasskammer (260) erstreckt; und
einen langgestreckten Auslassanschluss (230), der sich von der langgestreckten Auslasskammer (170) aus erstreckt, wobei der langgestreckte Auslassanschluss (230) konfiguriert ist, um einen Auslassfluidstrom (90), der sowohl den Treibfluidstrom (70) als auch den Saugeinlassfluidstrom (76) umfasst, entlang einer Auslassstromachse (92) abzugeben, und wobei ferner die Auslassstromachse (92) unter einem Auslassstromschrägwinkel (96) relativ zur Antriebsstromachse (72) ausgerichtet ist.

2. Luftverteilerdüse (100) nach Anspruch 1, die ferner eine Treibfluid-Beschleunigungsstruktur (290) aufweist, die konfiguriert ist, um eine Geschwindigkeit des Treibfluidstroms (70) zu erhöhen, wenn der Treibfluidstrom (70) in die langgestreckte Einlasskammer (150) eintritt.

3. Luftverteilerdüse (100) nach Anspruch 2, bei der die Treibfluid-Beschleunigungsstruktur (290) mindestens eines der folgenden Merkmale aufweist:
(i) einen Bereich mit reduzierter Querschnittsfläche;
(ii) einen verjüngten oder zumindest teilweise verjüngten Bereich;
(iii) eine Öffnung (292); und
(iv) eine Mehrzahl von Öffnungen (292).

4. Luftverteilerdüse (100) nach einem der Ansprüche 1-3, die ferner eine Trennstruktur (300) aufweist, die sich zwischen der langgestreckten Auslasskammer (170) und der Saugeinlasskammer (260) erstreckt und diese fluidmäßig isoliert.

5. Luftverteilerdüse (100) nach Anspruch 4, bei der die Trennstruktur (300) die langgestreckte Auslasskammer (170) und/oder die Saugeinlasskammer (260) definiert oder zumindest teilweise definiert.

6. Luftverteilerdüse (100) nach Anspruch 4 oder 5, bei der:
die Trennstruktur (300) eine aerodynamisch geformte Oberfläche (310) aufweist, die einen Bereich (262) der Saugeinlasskammer (260) definiert oder zumindest teilweise definiert, der sich in die langgestreckte Einlasskammer (150) öffnet; und, optional,
der Bereich (262) der Saugeinlasskammer (260), der sich in die langgestreckte Einlasskammer (150) öffnet, eine konvexe Oberfläche und/oder eine Coanda-Oberfläche aufweist.

7. Luftverteilerdüse (100) nach einem der Ansprüche 4-6, bei der die Trennstruktur (300) ferner eine Auslassstromumlenkstruktur (320) aufweist, die geformt ist, um den Auslassstrom (90) von dem Saugeinlassfluidstrom (76) wegzulenken.

8. Luftverteilerdüse (100) nach Anspruch 7, bei der die Auslassstromumlenkstruktur (320) innerhalb der langgestreckten Auslassöffnung (230) angeordnet ist und/oder die langgestreckte Auslassöffnung (230) definiert oder zumindest teilweise definiert.

9. Luftverteilerdüse (100) nach einem der Ansprüche 1-8, bei der die Luftverteilerdüse (100) ferner einen Sensor (282) aufweist, der in der Sensoröffnung (280) angeordnet ist.

10. Luftverteilerdüse (100) nach einem der Ansprüche 1-9, bei der die Saugeinlasskammer (260) geformt ist, um den Saugeinlassfluidstrom (76) in die langgestreckte Einlasskammer (150) zu leiten, so dass sich der Saugeinlassfluidstrom (76) mit dem Treibfluidstrom (70) in der langgestreckten Einlasskammer (150) vereinigt.

11. Luftverteilerdüse (100) nach einem der Ansprüche 1-10, bei der:
die Saugeinlassöffnung (270) koplanar mit der langgestreckten Auslassöffnung (230) ist; und, optional,
die Saugeinlassstromachse (78) parallel zur Auslassstromachse (92) ist.

12. Flugzeug (10), umfassend:
die Luftverteilerdüse (100) nach einem der Ansprüche 1-11; und
eine Luftzuführungsleitung (30), die konfiguriert ist, um den Treibfluidstrom (70) zu der Treibfluideinlassöffnung (220) bereitzustellen; und, optional, wobei:
das Flugzeug (10) ferner ein Umgebungssteuersystem (40) aufweist, das mit dem Sensor (282) in Verbindung steht, und das Umgebungssteuersystem (40) konfiguriert ist, um eine Durchflussrate des Treibfluidstroms (70) zumindest teilweise auf der Grundlage einer Sensorablesung von dem Sensor (282) zu steuern.

13. Verfahren zur Verwendung der Luftverteilerdüse (100) nach einem der Ansprüche 1 bis 12, wobei das Verfahren umfasst:
Zuführen des Treibfluidstroms (70) zu der langgestreckten Einlasskammer (150) über die Treibfluideinlassöffnung (220) und entlang einer Treibstromrichtung;
Umlenken des Treibfluidstroms (70) in der langgestreckten Einlasskammer (150), um einen Schlitzfluidstrom (206) zu erzeugen, der durch den langgestreckten Schlitz (190) und in die langgestreckte Auslasskammer (170) strömt, wodurch innerhalb der langgestreckten Auslasskammer (170) ein Paar von gegenläufigen Wirbeln (80) innerhalb des Schlitzfluidstroms (206) erzeugt wird; und
Ausstoßen des Auslassfluidstroms (90) aus der langgestreckten Auslassöffnung (230) entlang einer Auslassstromrichtung.

14. Verfahren nach Anspruch 13, wobei das Verfahren als Reaktion auf das Bereitstellen des Treibfluidstroms (70) ferner das Erzeugen eines Sogs umfasst, der den Saugeinlassfluidstrom (76) über die Saugeinlassöffnung (270) in die Saugeinlasskammer (260) zieht.

15. Verfahren nach Anspruch 14, wobei das Verfahren ferner umfasst:
Mischen des Treibfluidstroms (70) mit dem Saugeinlassfluidstrom (76) innerhalb der langgestreckten Einlasskammer (150); und/oder
Messen einer Temperatur des Saugeinlassfluidstroms (76) und, optional, selektives Regulieren einer Durchflussrate des Treibfluidstroms (70), zumindest teilweise basierend auf der Temperatur des Saugeinlassfluidstroms (76).

## Revendications

1. Buse de distribution d'air (100), comprenant :
une chambre d'entrée allongée (150) s'étendant le long d'une longueur de chambre d'entrée allongée (152) mesurée le long d'un axe longitudinal de chambre d'entrée allongée (154) de la chambre d'entrée allongée (150) ;
une chambre de sortie allongée (170) s'étendant au moins partiellement le long de la longueur de chambre d'entrée allongée (152) ;
une fente allongée (190) qui s'étend entre, et interconnecte de manière fluidique, la chambre d'entrée allongée (150) et la chambre de sortie allongée (170) ;
un orifice d'entrée de fluide moteur (220) qui s'étend dans la chambre d'entrée allongée (150), dans laquelle l'orifice d'entrée de fluide moteur (220) est configuré pour recevoir un écoulement de fluide moteur (70) le long d'un axe d'écoulement moteur (72), dans laquelle l'axe d'écoulement moteur (72) est parallèle à l'axe longitudinal de chambre d'entrée allongée (154) ;
une chambre d'entrée d'aspiration (260) qui s'étend d'un orifice d'entrée d'aspiration (270) à la chambre d'entrée allongée (150), dans laquelle l'orifice d'entrée d'aspiration (270) s'ouvre dans la chambre d'entrée d'aspiration (260), dans lequel l'orifice d'entrée d'aspiration (270) est configuré pour recevoir un écoulement de fluide d'entrée d'aspiration (76) le long d'un axe d'écoulement d'entrée d'aspiration (78) ;
un orifice de capteur (280) qui s'étend dans la chambre d'entrée d'aspiration (260) ; et
un orifice de sortie allongé (230) qui s'étend à partir de la chambre de sortie allongée (170), dans laquelle l'orifice de sortie allongé (230) est configuré pour décharger un écoulement de fluide de sortie (90), qui comprend à la fois l'écoulement de fluide moteur (70) et l'écoulement de fluide d'entrée d'aspiration (76), le long d'un axe d'écoulement de sortie (92), et dans laquelle en outre l'axe d'écoulement de sortie (92) est orienté selon un angle d'inclinaison d'écoulement de sortie (96) par rapport à l'axe d'écoulement moteur (72).

2. Buse de distribution d'air (100) selon la revendication 1, comprenant en outre une structure d'accélération de fluide moteur (290) configurée pour augmenter une vitesse de l'écoulement de fluide moteur (70) lorsque l'écoulement de fluide moteur (70) entre dans la chambre d'entrée allongée (150).

3. Buse de distribution d'air (100) selon la revendication 2, dans laquelle la structure d'accélération de fluide moteur (290) inclut au moins un parmi :
(i) une région d'aire de section transversale réduite ;
(ii) une région effilée ou au moins partiellement effilée ;
(iii) une ouverture (292) ; et
(iv) une pluralité d'ouvertures (292).

4. Buse de distribution d'air (100) selon l'une quelconque des revendications 1 à 3, comprenant en outre une structure de séparation (300) qui s'étend entre, et isole de manière fluidique, la chambre de sortie allongée (170) et la chambre d'entrée d'aspiration (260).

5. Buse de distribution d'air (100) selon la revendication 4, dans laquelle la structure de séparation (300) définit, ou définit au moins partiellement, au moins l'une de la chambre de sortie allongée (170) et de la chambre d'entrée d'aspiration (260).

6. Buse de distribution d'air (100) selon la revendication 4 ou 5, dans laquelle :
la structure de séparation (300) comprend une surface mise en forme de manière aérodynamique (310) qui définit, ou partiellement au moins définit, une région (262) de la chambre d'entrée d'aspiration (260) qui s'ouvre dans la chambre d'entrée allongée (150) ; et, facultativement,
la région (262) de la chambre d'entrée d'aspiration (260) qui s'ouvre dans la chambre d'entrée allongée (150) comprend une surface convexe et/ou une surface à effet Coanda.

7. Buse de distribution d'air (100) selon l'une quelconque des revendications 4 à 6, dans laquelle la structure de séparation (300) comprend en outre une structure de redirection d'écoulement de fluide de sortie (320) mise en forme pour diriger l'écoulement de fluide de sortie (90) à l'écart de l'écoulement de fluide d'entrée d'aspiration (76).

8. Buse de distribution d'air (100) selon la revendication 7, dans laquelle la structure de redirection d'écoulement de fluide de sortie (320) est positionnée à l'intérieur de l'orifice de sortie allongé (230) et/ou définit, ou définit au moins partiellement, l'orifice de sortie allongé (230).

9. Buse de distribution d'air (100) selon l'une quelconque des revendications 1 à 8, dans laquelle la buse de distribution d'air (100) comprend en outre un capteur (282) positionné à l'intérieur de l'orifice de capteur (280).

10. Buse de distribution d'air (100) selon l'une quelconque des revendications 1 à 9, dans laquelle la chambre d'entrée d'aspiration (260) est mise en forme pour diriger l'écoulement de fluide d'entrée d'aspiration (76) dans la chambre d'entrée allongée (150) de sorte que l'écoulement de fluide d'entrée d'aspiration (76) se combine avec l'écoulement de fluide moteur (70) à l'intérieur de la chambre d'entrée allongée (150).

11. Buse de distribution d'air (100) selon l'une quelconque des revendications 1 à 10, dans laquelle :
l'orifice d'entrée d'aspiration (270) est situé sur le même plan que l'orifice de sortie allongé (230) ; et, facultativement,
l'axe d'écoulement d'entrée d'aspiration (78) est parallèle à l'axe d'écoulement de sortie (92).

12. Aéronef (10), comprenant :
la buse de distribution d'air (100) selon l'une quelconque des revendications 1 à 11 ; et
un conduit d'alimentation en air (30) configuré pour fournir l'écoulement de fluide moteur (70) à l'orifice d'entrée de fluide moteur (220) ; et, facultativement, dans lequel :
l'aéronef (10) comprend en outre un système de commande d'environnement (40) en communication avec le capteur (282), et le système de commande d'environnement (40) est configuré pour commander un débit d'écoulement de l'écoulement de fluide moteur (70) sur la base, au moins en partie, d'une lecture de capteur à partir du capteur (282).

13. Procédé d'utilisation de la buse de distribution d'air (100) selon l'une quelconque des revendications 1 à 12, le procédé comprenant les étapes consistant à :
fournir l'écoulement de fluide moteur (70) à la chambre d'entrée allongée (150) via l'orifice d'entrée de fluide moteur (220) et le long d'une direction d'écoulement moteur ;
rediriger, à l'intérieur de la chambre d'entrée allongée (150), l'écoulement de fluide moteur (70) pour générer un écoulement de fluide de fente (206) qui s'écoule à travers la fente allongée (190) et jusque dans la chambre de sortie allongée (170), en générant ainsi, à l'intérieur de la chambre de sortie allongée (170), une paire de tourbillons contrarotatifs (80) à l'intérieur de l'écoulement de fluide de fente (206) ; et
décharger, à partir de l'orifice de sortie allongé (230), l'écoulement de fluide de sortie (90) le long d'une direction d'écoulement de sortie.

14. Procédé selon la revendication 13, dans lequel, en réponse à la fourniture de l'écoulement de fluide moteur (70), le procédé comprend en outre une génération d'une aspiration qui attire l'écoulement de fluide d'entrée d'aspiration (76) jusque dans la chambre d'entrée d'aspiration (260) via l'orifice d'entrée d'aspiration (270).

15. Procédé selon la revendication 14, dans lequel le procédé comprend en outre les étapes consistant à :
mélanger l'écoulement de fluide moteur (70) avec l'écoulement de fluide d'entrée d'aspiration (76) à l'intérieur de la chambre d'entrée allongée (150) ; et/ou
mesurer une température de l'écoulement de fluide d'entrée d'aspiration (76) et, facultativement, réguler sélectivement un débit d'écoulement de l'écoulement de fluide moteur (70) sur la base, au moins en partie, de la température de l'écoulement de fluide d'entrée d'aspiration (76).
